(19) Europäisches Patentamt
European Patent Office
Office européen des brevets

(11) **EP 1 190 990 A1**

(12) **EUROPÄISCHE PATENTANMELDUNG**

(43) Veröffentlichungstag:
27.03.2002 Patentblatt 2002/13

(51) Int Cl.7: **C02F 1/52**, C04B 7/02,
C02F 1/72

(21) Anmeldenummer: 01890276.7

(22) Anmeldetag: 26.09.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **26.09.2000 AT 7102000 U**

(71) Anmelder: **Tribovent Verfahrensentwicklung GmbH**
**6700 Lorüns (AT)**

(72) Erfinder: **Edlinger, Alfred, Dipl.-Ing.**
**6780 Bartholomäberg (AT)**

(74) Vertreter: **Haffner, Thomas M.**
**Patentanwalt,**
**Haffner Thomas M., Dr.,**
**Schottengasse 3a**
**1014 Wien (AT)**

(54) **Verfahren zum Reinigen von Abwässern sowie Mittel zur Durchführung dieses Verfahrens**

(57) Bei einem Verfahren zum Reinigen von Abwässern und zur Wasseraufbereitung werden hydraulische Bindemittel mit einer Feinheit von 2000 - 5000 Blaine (cm$^2$/g) ggf. nach einer Oxidation der Abwässer in Mengen zwischen 1 und 10 g/l zugesetzt, wobei anschließend sedimentiert und Schlamm kontinuierlich ausgetragen wird.

**Beschreibung**

Die Erfindung bezieht sich auf ein Verfahren zum Reinigen von Abwässern und zur Wasseraufbereitung, ein Mittel zur Durchführung dieses Verfahrens und im Besonderen auf die Verwendung von hydraulisch aktiven Bindemitteln für die Abwasserreinigung bzw. Wasseraufbereitung.

Für das Reinigen von Abwässern sind eine Reihe von spe-ziellen Adsorbenzien bekannt geworden, mit welchen Schadstoffe aus kommunalen und/ oder industriellen Abwässern adsorbiert werden. Abgesehen davon, daß derartige Adsorbenzien in ihrer Herstellung relativ aufwendig sind und entsprechende Kosten verursachen, gestaltet sich die Entsorgung von mit Schadstoffen beladenen Adsorbenzien relativ aufwendig. Neben einer Adsorbtion sind in der Regel auch weitere Verfahrensschritte erforderlich, um den gewünschten pH-Wert einzustellen, wofür wiederum Chemikalien eingesetzt werden müssen. Der Einsatz von Säuren oder Laugen zur Einstellung des pH-Wertes führt gleichzeitig zu einer Beeinträchtigung der Adsorbtionseigenschaften des eingesetzten Adsorbtionsmittels. Daraus resultiert, daß alle Verfahrens-schritte bei derartigen konventionellen Verfahren gesondert überwacht werden müssen, um negative Rückwirkungen auf andere Verfahrensschritte zu vermeiden.

Die Erfindung zielt nun darauf ab, ein einfaches und kostengünstiges Verfahren zu schaffen, mit welchem unmittelbar eine Mehrzahl von für die Abwasserreinigung erforderlichen Schritten in einem einzigen Verfahren durchgeführt werden können und gleichzeitig ein Produkt entsteht, dessen Entsorgung sich wesentlich einfacher gestaltet und Schadstoffe in der Matrix eingebunden enthält. Zur Lösung dieser Aufgabe besteht das erfindungsgemäße Verfahren im wesentlichen darin, daß hydraulische Bindemittel mit einer Feinheit von 2000-5000 Blaine ($cm^2/g$) ggf. nach einer Oxidation der Abwässer in Mengen zwischen 1 und 10 g/l zugesetzt werden, daß anschließend sedimentiert und Schlamm kontinuierlich ausgetragen wird.

Es hat sich überraschenderweise gezeigt, daß durch Einsatz von hydraulischen Bindemitteln mit der geforderten Feinheit eine Mehrzahl von für die Reinigung und die Aufbereitung von Abwässern erforderlichen Verfahrensschritten in einem Verfahrensschritt durchgeführt werden können. Aufgrund der Natur der hydraulischen Bindemitteln erfolgen eine Reihe von parallel ablaufenden Reaktionen im wesentlichen gleichzeitig, sodaß mit überaus kurzen Behandlungszeiten ein hohes Maß an Reinigung erzielt werden kann. Im einzelnen finden Ionenaustausch-Reaktionen, eine Flockung, eine Fällung, eine Neutralisation sowie eine Adsorbtion von Schwermetallsalzen im basischen Bereich statt, sofern Galvanikabwässer als Abwässer eingesetzt werden. Die ablaufenden Reaktionen können gemeinsam wie folgt beschrieben werden:

1) Fällung von Carbonat-Härte (Enthärtung, Entsalzung)

$$Ca\,(HCO_3)_2 + Ca(OH)_2 \rightarrow CaCO_3 + H_2O$$

2) Neutralisation von Säuren

$$H_2SO_4 + Ca(OH)_2 \rightarrow CaSO_4 + 2H_2O$$

$$2HF + Ca(OH)_2 \rightarrow CaF_2 + 2H_2O$$

3) Adsorbtion/Ionenaustausch von Anionen, z.B. $SO4^{--}$, $Cl^-$ Komplexbindung an der $Al_2O_3$-Struktur: Ettringit, Friedelsches Salz

$$(Ettringit = Ca_6\,Al_2[(OH)_4\,SO_4]_3 \cdot 26\,H_2O)$$

$$(Friedelsches\,Salz = 3\,CaO \cdot Al_2O_3 \cdot CaCl_2 \cdot 10\,H_2O)$$

4) Fällung, Adsorbtion von Schwermetallsalzen im basischen Bereich, z.B. Galvanik-Abwässer, z.B. an $SiO_2$-Gel-Struktur, welche aus Bindemittel freigesetzt werden

Zusätzlich erfolgt auch eine Adsorbtion von Organika im Wasser, wobei insbesondere Huminsäuren neutralisiert werden können. Mit organischen Substanzen belastete Abwässer werden auch bevorzugt zumindest teilweise oxidiert um polare Strukturen bzw. Säuren herzustellen, wobei Alkohole, Aldehyde, Ketone und organische Säuren mit einem einfachen vorgeschalteten Oxidationsschritt, beispielsweise unter Einleiten von Ozon oder unter Zusatz von $H_2O_2$ hergestellt werden können. In besonders vorteilhafter Weise wird das erfindungsgemäße Verfahren so durchgeführt, daß der ausgetragene Schlamm mechanisch entwässert wird, wobei vorzugsweise das über dem Schlamm abgezogene Wasser filtriert wird. Bei Verwendung von Hüttensandmehl, Hochofenschlacke bzw. von Klinkerstaub haben sich überraschend kurze Kontaktzeiten und Reaktionszeiten als ausreichend herausgestellt. Bereits 30 sec. nach Zugabe von Hüttensandmehl wurden bereits mehr als 50 % sedimentiert, wobei nach einer Zeit von etwa 10 min der Großteil von gutsedimentierendem Schlackenanteil abgetrennt wurde. Mit Vorteil wird daher das erfindungsgemäße Verfahren so duchgeführt, daß die Kontaktzeit zwischen 15 und 60 min und die Sedimentation über einen Zeitraum von 5 bis 30 min, vorzugsweise 10 bis 15 min vorgenommen wird.

Im Hinblick auf die gewünschte Neutralisation hat sich die Dosierung der hydraulischen Bindemittel als besonders kritisch herausgestellt und es wurde festgestellt, daß bei Dosierungen von 1, 5 und 10 g/l Hüttensandmehl eine deutliche Vermindung der Resthärte beobachtet werden konnte. Eine Zugabe von 20 bis 50 g/l Schlacke führt dahingegen zu einer Aufhärtung. Die Härtereduktion war bei Zugabe von 5 g/l besonders ausgeprägt. Sie betrug über 40 % bezogen auf die Ausgangshärte. Mit Vorteil wird daher das erfindungsgemäße Verfahren so durchgeführt, daß hydraulische Bindemittel wie Hüttensand oder gemahlene Hochofenschlacke und/oder Klinker in Mengen zwischen 4 und 6 g/l, vorzugsweise etwa 5 g/l, eingesetzt werden.

Das Mittel zur Durchführung des erfindungsgemäßen Verfahrens besteht erfindungsgemäß aus hydraulisch aktiven Bindemitteln, wie z.B. Hüttensand, Hochofenschlacke und/oder Klinker mit einer Feinheit zwischen 2000 und 5000 Blaine (cm$^2$/g). Derartige hydraulisch aktive Bindemittel erlauben es, die Fällungsprodukte in einer zementös erhärtenden Matrix fest einzubinden, sodaß auch eine einfache Entsorgung ohne weiteres gelingt.

Die Erfindung bezieht sich ferner auf die Verwendung von hydraulisch aktiven Bindemitteln für die Abwasserreinigung bzw. Wasseraufbereitung und insbesondere die Verwendung von Hüttensand, Hochofenschlacke und/oder Klinker für die Zwecke nach Anspruch 1, wobei eine derartige Verwendung bevorzugt darin besteht, daß die hydraulisch aktiven Bindemittel in Mengen von 1 bis 10 g/l Abwasser zugesetzt werden.

Zur Überprüfung der Wirksamkeit der eingesetzten Mengen wurden Modellversuche mit hydrogenkarbonatfreiem und hydrogenkarbonathaltigem Wasser vorgenommen. Als hydrogenkarbonathaltiges Wasser wurde ein Modellwasser mit 4,1 mmol/l eingesetzt. Das hydrogenkarbonatfreie Wasser enthielt ebenso wie das hydrogenkarbonathältige Wasser 3 mmol/l Kalziumchlorid, d.h. 120,2 mg/l Ca$^{2+}$ bzw. 441,1 mg/l CaCl$_2$ x 2 H$_2$O.

Mit derartigen Modellwässern wurden Härtefällungsversuche mit Konzentrationen von 1, 5, 10 und 20 g/l hydraulisches Bindemittel durchgeführt, wobei die Bestimmung der Sedimentation durch Membranfiltration mit 0,45 µm Filtern vorgenommen wurde. Es wurde weiters der pH-Wert, die elektrische Leitfähigkeit und die Gesamthärte bestimmt.

Alle Proben zeigten ein hervorragendes Sedimentationsverhalten, wobei bei Einsatz von 10 g/l Hüttensandmehl der Hauptteil des Hüttensandmehles überaus schnell sedimentiert. Nach einer Minute waren bereits bis zu 70 % der Schlacke sedimentiert. Nach zwei Minuten 80 % und nach 5 Minuten über 90 % der Schlacke entfernt.

Wie bereits erwähnt, konnte eine Verminderung der Resthärte in den Versuchen beobachtet werden, bei denen 1, 5 und 10 g/l Hüttensandmehl zugegeben wurden. Die Zugabe von 20 und 50 g/l Schlacke führte hingegen zu einer Aufhärtung des einsetzten Wassers. Die Härtereduktion war bei Zugabe von 5 g/l Hüttensandmehl besonders ausgeprägt und betrug 42 % bezogen auf die Ausgangshärte von 2,8 mmol/l im eingesetzten Wasser. Durch die Zugabe von 1 und 10 g/l Schlacke zum gleichen Wasser konnte eine Härtereduktion von 14 % erzielt werden.

Bei Betrachtung des pH-Wertes und der elektrischen Leitfähigkeit zeigte sich bei Konstellationen von 1 und 5 g/l Schlacke sowie bei Konzentrationen von 10, 20 und 50 g/l Schlacke jeweils ein annähernd gleicher pH-Wert. Die elektrische Leitfähigkeit sank hingegen bei Dosierungen von 1 g/l bis 5 g/l Schlackenzugabe ab und stieg bei Zugabemengen von 5 bis 50 g/l kontinuierlich an. Daraus resultiert für die Schlackendosierung bei 1 g/l Schlacke eine Unterdosierung, bei 5 g/l eine optimale Dosierung mit maximaler Härtereduktion und bei 10, 20 und 50 g/l eine Überdosierung verbunden mit einer Aufhärtung des eingesetzten Wassers.

In einer weiteren Versuchsreihe wurde der Einfluß der Kontaktzeit auf die Härtereduktion untersucht. Bei einem Einsatz von 5 g/l Hüttensandmehl konnte kein nennenswerter Einfluß der Kontaktzeit gegenüber der Härtereduktion festgestellt werden, wobei Kontaktzeiten zwischen 15 und 60 min variiert wurden. Die Standardkontaktzeit bei Härtereduktionsversuchen betrug 20 min.

Aus den Ergebnissen zeigte sich, daß hinsichtlich der Reaktionsgeschwindigkeit eine Kontaktzeit von 2 bis 3 min als ausreichend bezeichnet werden konnte um bei entsprechend optimaler Schlackendosierung das Ende der Fällungsreaktion zu erreichen. Unter Verwendung eines hydrogencarbonatfreien Modellwasser zeigte der pH-Wert-Verlauf bei Zugabe von 50 g/l Hüttensandmehl ei-nen Anstieg innerhalb von 15 sec von pH 5,8 auf pH 11,5. Nach etwa 3 min wurde ein stabiler Endwert von pH 11,7 erreicht. Eine Fällung der Härtebildner erfolgte hier nicht, da hier hydrogen-karbonatfreies Modellwasser eingesetzt wurde.

Bei Versuchen mit hydrogenkarbonatversetztem Wasser zeigte der pH-Wertverlauf nach Zugabe von 10 g/l Hüttensandmehl eine schnelle und intensive Erdalkali-(und Alkali-)freisetzung, wobei nach 30 sec ein pH-Wert von 9,2 als Zwischenmaximum erreicht wurde bevor der pH-Wert auf einen stabilen Endwert von pH 10,6 anstieg. Die Härtefällreaktion erfolgte in den ersten 2 min. Im weiteren Verlauf kam es aufgrund der Überdosierung zu einer Aufhärtung des Modellwassers. Bei optimaler Dosierung von 5 g/l Hüttensandmehl steigt der pH-Wert nur leicht an und erreicht am Ende der Fällungsreaktion wiederum seinen Ausgangswert von pH 8,1.

Die Alkalinität des verwendeten Hüttensandmehls lag bei 0,6 mol/kg Schlacke. Zur Abschätzung der zu erwartenden Silikatfreisetzung aus der Schlacke wurde der Silikatgehalt der Schlacke durch Zugabe von 5 g/l Hüttensandmehl zum hydrogenkarbonathältigen Einsatzwasser bestimmt. Der Silikatgehalt der sedimentierten Probe lag bei 30,5 mg/l. Zur Filtration der Probe über 0,45 µm konnte der Silikatgehalt auf 18,1 mg/l abgesenkt werden, woraus resultiert, daß ungefähr die Hälfte des Silikates in partikulärer und die andere Hälfte in gelöster Form vorliegt. Die Kontaktzeit betrug wie bei den Härtefällungsversuchen 20 min.

Insgesamt hat sich gezeigt, daß hydraulisch aktive Bindemittel und insbesondere Hüttensandmehl für die Enthärtung und Alkalisierung von Prozeßwasser geeignet sind und eine Verminderung der abfiltrierbaren Stoffe von rund 72 % innerhalb der ersten 60 sec festgestellt werden kann. Nach 10 min waren über 96 % der abfiltrierbaren Stoffe sedimentiert.

Das Ende der Fällungsreaktion war nach 2 bis 3 min erreicht, wobei eine zementöse härtende Matrix, in welcher alle Stoffe fest eingebunden waren, erhalten werden konnte.

**Patentansprüche**

1. Verfahren zum Reinigen von Abwässern und zur Wasseraufbereitung, **dadurch gekennzeichnet, daß** hydraulische Bindemittel mit einer Feinheit von 2000 - 5000 Blaine (cm$^2$/g) ggf. nach einer Oxidation der Abwässer in Mengen zwischen 1 und 10 g/l zugesetzt werden, daß anschließend sedimentiert und Schlamm kontinuierlich ausgetragen wird.

2. Verfahren nach Anspruch 1, **dadurch gekennzeichnet, daß** der ausgetragene Schlamm mechanisch entwässert wird.

3. Verfahren nach Anspruch 1 oder 2, **dadurch gekennzeichnet, daß** das über dem Schlamm abgezogene Wasser filtriert wird.

4. Verfahren nach einem der Ansprüche 1, 2 oder 3, **dadurch gekennzeichnet, daß** die Kontaktzeit zwischen 15 und 60 min und die Sedimentation über einen Zeitraum von 5 bis 30 min, vorzugsweise 10 bis 15 min vorgenommen wird.

5. Verfahren nach einem der Ansprüche 1 bis 4, **dadurch gekennzeichnet, daß** hydraulische Bindemittel wie Hüttensand oder gemahlene Hochofenschlacke und/oder Klinker in Mengen zwischen 4 und 6 g/l, vorzugsweise etwa 5 g/l, eingesetzt werden.

6. Mittel zur Durchführung des Verfahrens nach einem der Ansprüche 1 bis 5, **dadurch gekennzeichnet, daß** es aus hydraulisch aktiven Bindemitteln, wie z. B. Hüttensand, Hochofenschlacke und/oder Klinker mit einer Feinheit zwischen 2000 und 5000 Blaine (cm$^2$/g) besteht.

7. Verwendung von hydraulisch aktiven Bindemitteln für die Abwasserreinigung bzw. Wasseraufbereitung.

8. Verwendung von Hüttensand, Hochofenschlacke und/oder Klinker für die Zwecke nach Anspruch 1.

9. Verwendung nach Anspruch 7 oder 8, **dadurch gekennzeichnet, daß** die hydraulisch aktiven Bindemittel in Mengen von 1 bis 10 g/l Abwasser zugesetzt werden.

**Europäisches Patentamt**

# EUROPÄISCHER RECHERCHENBERICHT

Nummer der Anmeldung

EP 01 89 0276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 383 928 A (SHERWOOD JOSEPH C ET AL) 17. Mai 1983 (1983-05-17) | 1-4,6,7 | C02F1/52 C04B7/02 C02F1/72 |
| Y | * das ganze Dokument * | 8,9 | |
| X | US 3 947 283 A (UCHIKAWA HIROSHI ET AL) 30. März 1976 (1976-03-30) | 1,2,6,7 | |
| Y | * das ganze Dokument * | 8,9 | |
| X | US 4 116 705 A (CHAPPELL CHRISTOPHER LEE) 26. September 1978 (1978-09-26) * das ganze Dokument * | 1,2,6,7 | |
| X | US 4 454 048 A (BRUNBECK RICHARD T ET AL) 12. Juni 1984 (1984-06-12) * das ganze Dokument * | 1-3,7 | |
| X | EP 0 226 787 A (LADENDORF WOLFDIETER F) 1. Juli 1987 (1987-07-01) | 7,8 | |
| A | * das ganze Dokument * | 1-6,9 | |
| A | US 4 244 818 A (ABSON JAMES W) 13. Januar 1981 (1981-01-13) * Zusammenfassung * | 1,7 | |

**RECHERCHIERTE SACHGEBIETE (Int.Cl.7)**

C02F
C04B

Der vorliegende Recherchenbericht wurde für alle Patentansprüche erstellt

| Recherchenort | Abschlußdatum der Recherche | Prüfer |
|---|---|---|
| DEN HAAG | 10. Dezember 2001 | Serra, R |

**ANHANG ZUM EUROPÄISCHEN RECHERCHENBERICHT
ÜBER DIE EUROPÄISCHE PATENTANMELDUNG NR.**  EP 01 89 0276

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2001

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US | 4383928 | A | 17-05-1983 | US | 4454048 | A | 12-06-1984 |
| | | | | CA | 1177585 | A1 | 06-11-1984 |
| US | 3947283 | A | 30-03-1976 | JP | 1086480 | C | 26-02-1982 |
| | | | | JP | 50040469 | A | 14-04-1975 |
| | | | | JP | 56018280 | B | 27-04-1981 |
| US | 4116705 | A | 26-09-1978 | GB | 1485625 | A | 14-09-1977 |
| | | | | BE | 869015 | A7 | 03-11-1978 |
| | | | | CY | 968 | A | 22-12-1978 |
| | | | | DE | 2426641 | A1 | 19-12-1974 |
| | | | | HK | 61278 | A | 27-10-1978 |
| | | | | JP | 53114827 | A | 06-10-1978 |
| | | | | JP | 982272 | C | 27-12-1979 |
| | | | | JP | 50033219 | A | 31-03-1975 |
| | | | | JP | 54013256 | B | 29-05-1979 |
| | | | | KE | 2875 | A | 01-09-1978 |
| | | | | MY | 39178 | A | 31-12-1978 |
| | | | | NL | 7407415 | A | 03-12-1974 |
| US | 4454048 | A | 12-06-1984 | US | 4383928 | A | 17-05-1983 |
| | | | | CA | 1237544 | A1 | 31-05-1988 |
| EP | 0226787 | A | 01-07-1987 | DE | 3545321 | A1 | 25-06-1987 |
| | | | | DD | 254378 | A5 | 24-02-1988 |
| | | | | EP | 0226787 | A2 | 01-07-1987 |
| US | 4244818 | A | 13-01-1981 | AT | 280779 | A | 15-09-1989 |
| | | | | CA | 1102456 | A1 | 02-06-1981 |
| | | | | DE | 2960474 | D1 | 22-10-1981 |
| | | | | DK | 153479 | A | 16-10-1979 |
| | | | | EP | 0005011 | A1 | 31-10-1979 |
| | | | | IE | 48022 | B1 | 05-09-1984 |
| | | | | JP | 55008885 | A | 22-01-1980 |
| | | | | NO | 791027 | A ,B, | 16-10-1979 |

EPO FORM P0461

Für nähere Einzelheiten zu diesem Anhang : siehe Amtsblatt des Europäischen Patentamts, Nr.12/82